Europäisches Patentamt

**European Patent Office**

**Office européen des brevets**

(19)

(11) Numéro de publication: **0 188 934**
**B1**

(12)                **FASCICULE DE BREVET EUROPEEN**

(45) Date de publication du fascicule du brevet:
**26.10.88**

(51) Int. Cl.⁴: **F 16 C 17/03**

(21) Numéro de dépôt: **85402400.7**

(22) Date de dépôt: **04.12.85**

(54) **Palier fluide hydrodynamique comportant des patins à précharge évolutive.**

(30) Priorité: **06.12.84 FR 8418592**

(43) Date de publication de la demande:
**30.07.86 Bulletin 86/31**

(45) Mention de la délivrance du brevet:
**26.10.88 Bulletin 88/43**

(84) Etats contractants désignés:
**CH DE FR GB IT LI**

(56) Documents cités:
**FR - A - 1 354 199**
**FR - A - 1 474 879**
**FR - A - 1 538 467**
**FR - A - 2 116 141**
**FR - A - 2 133 373**
**FR - A - 2 528 135**

(73) Titulaire: **HISPANO-SUIZA Société anonyme dite:,
333, Bureaux de la Colline, F-92213 Saint Cloud (FR)**

(72) Inventeur: **Grisei, Charles Henri, 1, rue Maurice
Berteaux, F-95870 Bezons (FR)**
Inventeur: **Hus, Henri, 68, rue Louis Muret, F-91430 Igny
(FR)**

(74) Mandataire: **Moinat, François, S.N.E.C.M.A. Service des
Brevets Boîte Postale 81, F-91003 Evry Cédex (FR)**

ACTORUM AG

## Description

On connaît soit des paliers hydrodynamiques à patins dont la précharge est constante, soit des patins hydrostatiques dont la charge peut être ajustée. Le brevet FR-A-2 116 141 concerne un palier hydrostatique de cette dernière catégorie suivant lequel on utilise à l'arrêt et aux faibles vitesses une précharge faible obtenue uniquement par un ressort tandis que lorsque la vitesse de rotation augmente la charge du patin est accrue automatiquement au moyen d'un fluide extérieur. Par contre, dans la présente invention, on utilise un palier hydrodynamique dans lequel la charge évolutive des patins est obtenue par la mise en œuvre du fluide sous pression prélevé dans un film de fluide se trouvant sous le patin. En effet, lorsque l'arbre entre en rotation rapide, il entraîne avec lui le fluide qui s'intercale entre les patins et l'arbre, formant ainsi un film lubrifiant. La présente invention concerne un palier dans lequel, au moins l'un des patins est soumis à l'arrêt de l'arbre à l'action d'un organe élastique produisant une précharge limitée au strict nécessaire pour le maintien de l'ensemble, elle est caractérisée par le fait que ledit moyen élastique est soumis, lors du fonctionnement de l'arbre, à l'action de fluide sous pression prélevé à partir du film de fluide sous pression se trouvant sur le patin et de telle sorte que la charge sur le patin augmente avec la pression du film de fluide.

Suivant la présente invention, on utilise un palier hydrodynamique dans lequel on limite au démarrage l'action du ressort au strict nécessaire qui est suffisant pour le maintien de l'ensemble. L'augmentation du régime de rotation de l'arbre entraîne une augmentation correspondante de la pression du film de fluide et il suffit alors de se servir de cette pression pour faire varier l'action du ressort.

D'autres caractéristiques et avantages de l'invention seront mieux compris à la lecture de la description qui va suivre de plusieurs modes de réalisation et en se référant aux dessins annexés sur lesquels:

— la figure 1 est une vue en coupe d'un mode de réalisation d'un palier hydrodynamique selon l'invention suivant la ligne I-I de la figure 2;

— la figure 2 est une vue en bout du palier suivant la flèche II de la figure 1;

— la figure 3 est une vue en coupe transversale du palier suivant la ligne III-III de la figure 1;

— la figure 4 est une vue en coupe axiale d'un autre mode de réalisation d'un palier hydrodynamique suivant la ligne IV-IV de la figure 3;

— la figure 5 est une vue en bout du palier suivant la flèche V de la figure 4;

— la figure 6 est une vue en coupe du palier suivant la ligne VI-VI de la figure 4;

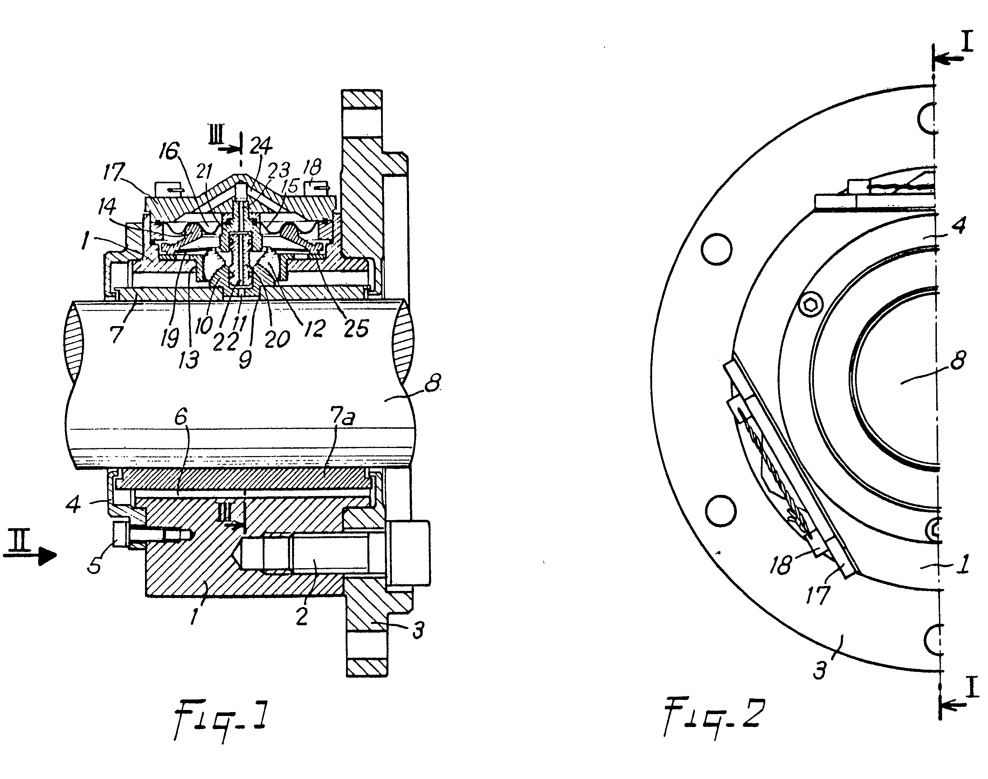

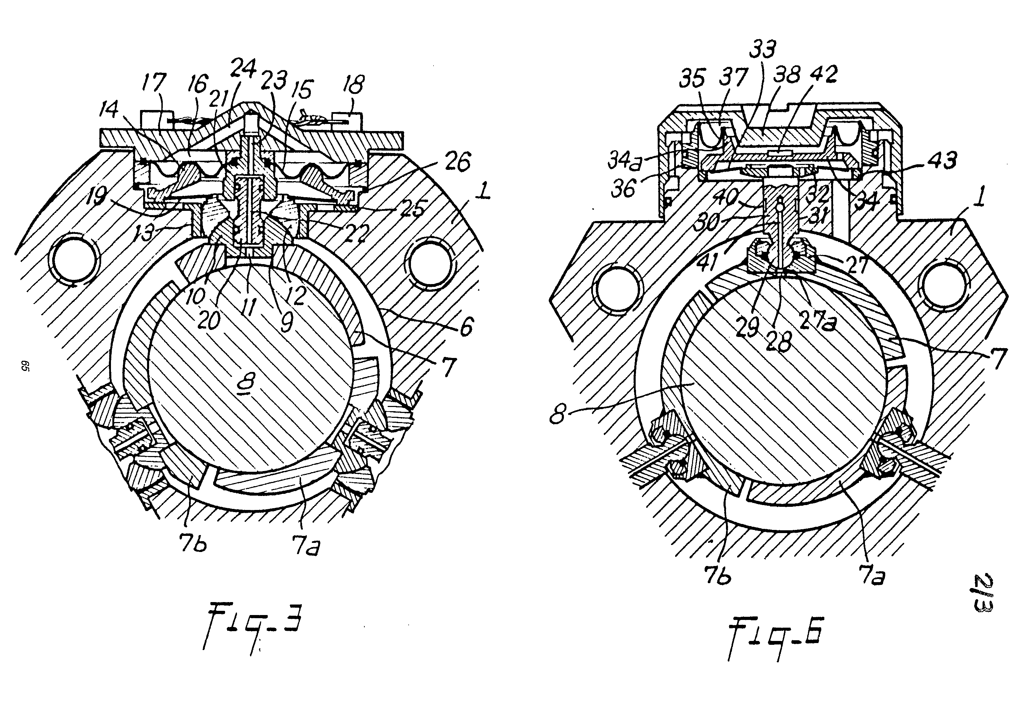

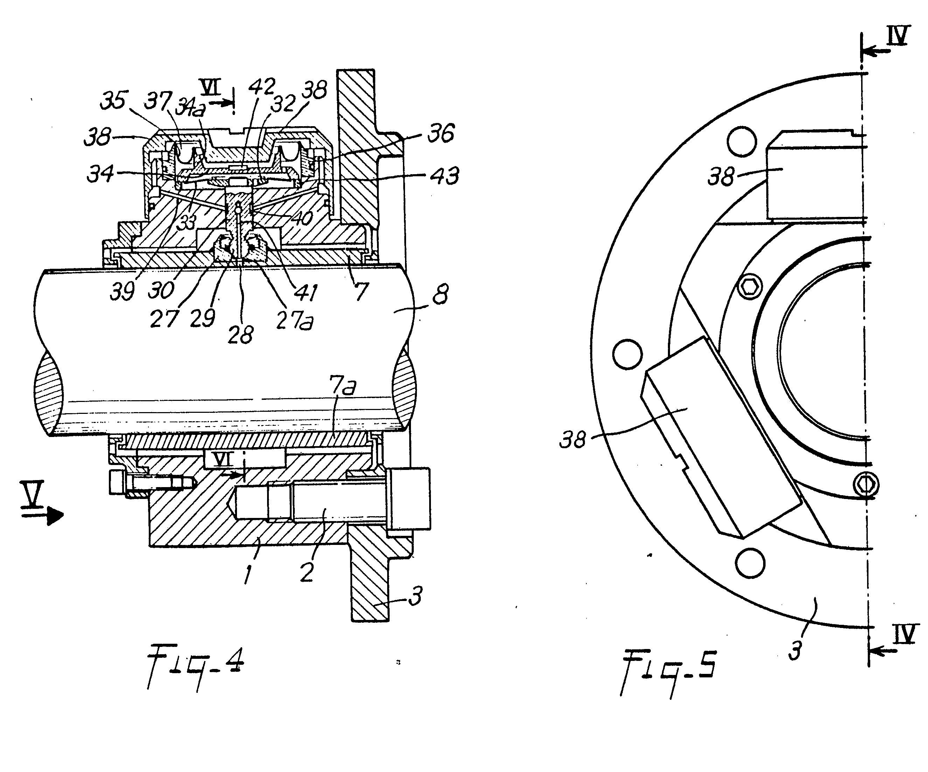

— aux figures 1, 2 et 3 on a représenté un palier hydrodynamique qui comprend un corps 1 fixé à l'une de ses extrémités au moyen de vis 2 sur une bride 3 et muni à son autre extrémité d'un couvercle 4 fixé au moyen de vis 5 sur le corps 1.

Le corps 1 présente un alésage 6 dans lequel sont disposés trois patins 7, 7a, 7b qui sont en appui sur un arbre rotatif 8. L'un des patins ou les trois patins 7, 7a, 7b sont munis du dispositif de précharge évolutive suivant l'invention et pour faciliter la compréhension la description sera limitée à l'un des patins tel que 7.

A cet effet, le patin 7 présente un orifice 9 débouchant à l'endroit du champ de pression maximale afin de prélever le fluide sous pression se trouvant entre l'arbre en rotation 8 et la face inférieure du patin 7. Dans cet orifice 9, est monté un élément 10 d'une rotule présentant un conduit central 11 et contre lequel est en appui un autre élément de rotule 12 qui est monté coulissant dans une bague 13 solidaire du corps 1 et engagée dans un alésage prévu dans ce dernier.

Autour de l'élément coulissant 12 est monté un organe annulaire 14 soumis à l'action d'une membrane souple 15 constituant l'une des parois d'une chambre de pression 16 fermée à sa partie supérieure par un couvercle 17 fixé par des vis 18 sur le corps 1 de palier.

Entre l'élément de rotule 12 et l'organe annulaire mobile 14, est montée une rondelle élastique 19 dont la périphérie est en appui contre l'organe annulaire et dont la partie centrale est en appui contre l'élément coulissant 12.

L'élément de rotule 10 présente un logement dans lequel est engagée l'une des parties sphériques d'une bobine 20 dont l'autre extrémité sphérique est engagée dans un logement d'une tête 21 fixée dans le couvercle 17.

La bobine 20 présente un conduit central 22 auquel fait suite un conduit 23 prévu dans la tête 21 et qui débouche dans des conduits 24 prévus dans le couvercle 17 qui aboutissent à la chambre de fluide sous pression 16.

Lorsque l'arbre 8 est arrêté, seule la rondelle élastique 19 exerce une précharge limitée au strict nécessaire pour le maintien de l'ensemble, ladite précharge s'exerçant sur les éléments 12 et 10 de la rotule qui agissent sur le patin 7.

Lorsque l'arbre 8 est entraîné en rotation, il se produit un film de fluide sous pression entre l'arbre et le patin, de telle sorte que le fluide sous pression est prélevé et dirigé par les orifices 9 et 11, par le conduit 22 de la bobine 20, par le conduit 23 de la tête 21 et par les conduits 24 vers la chambre sous pression 16.

Le fluide sous pression dans la chambre 16 exerce une pression sur la membrane 15 qui agit par l'intermédiaire de l'organe annulaire 14 sur la rondelle élastique qui est déformée et transmet une pression équivalente par les éléments 12 et 10 sur le patin 7. Il en résulte que la charge sur le patin 7 augmente avec la pression du film de fluide entre l'arbre 8 et le patin 7. L'organe annulaire 14 se déplace dans la limite d'un jeu réglé en valeur et en position entre deux cales 25 et 26.

Aux figures 4, 5 et 6 on a représenté un autre mode de réalisation d'un palier hydrodynamique et en se référant au patin 7, le dispositif comprend une pièce d'appui 27 fixée sur le patin qui présente un orifice 28 débouchant à l'endroit du champ de pression maximum.

La pièce d'appui 27 présente un logement sphérique dans lequel est montée une rotule 29 ménagée à l'une des extrémités d'un piston 30 monté coulissant dans un alésage 31 du corps 1 de palier.

A l'autre extrémité, le piston 30 est muni d'un chapeau 32 sur lequel est en appui par sa partie centrale une rondelle élastique 33 dont le bord périphérique est en appui contre un organe mobile 34 présentant un bord annulaire 34a sur lequel est fixée une membrane souple 35 qui est elle-même fixée à sa périphérie sur une bague 36 solidaire du corps 1 de palier.

L'organe mobile 34 et la membrane 35 forment l'une des parois d'une chambre 37 de fluide sous pression fermée par un bouchon ou couvercle 38 vissé sur le corps 1 du palier. La chambre 37 est en communication avec l'orifice 28 du patin par des conduits 39 ménagés dans le corps 1 par une gorge 40 et un conduit central 41 prévus dans le piston 31 et par un orifice 27a dans la pièce 27. Des cales 42 et 43 limitent le déplacement de l'organe mobile 34 comme dans l'exemple précédent.

Lorsque l'arbre 8 est arrêté, seule la rondelle élastique 33 exerce une précharge sur le patin 7 par l'intermédiaire du chapeau 32 du piston 30 et de la pièce d'appui 27.

Lorsque l'arbre 8 est entraîné en rotation, le prélèvement de fluide sous pression à partir du film de fluide s'effectue par l'orifice 28, le conduit 41, la gorge 40 et les conduits 39 vers la chambre 37.

Le fluide sous pression dans la chambre 37 agit sur la membrane 35 et l'organe mobile 34 qui provoque la déformation de la rondelle élastique 33. Cette déformation de la rondelle 33 se traduit par une pression exercée sur le piston 30 et sur le patin 7. Comme dans l'exemple précédent, la charge sur le patin 7 augmente avec la pression du film de fluide entre l'arbre 8 et le patin 7.

## Revendications

1. Palier fluide hydrodynamique constitué de patins disposés autour d'un arbre rotatif avec interposition d'un film de fluide sous pression, l'un au moins des patins (7, 7a, 7b) étant soumis à l'arrêt de l'arbre (8) à l'action d'un organe élastique (19, 33) produisant une précharge limitée au strict nécessaire pour le maintien de l'ensemble, caractérisé en ce que ledit moyen élastique (19, 33) est soumis lors du fonctionnement de l'arbre (8) à l'action du fluide sous pression prélevé à partir du film de fluide sous pression se trouvant sous le patin (7) et de telle sorte que la charge sur le patin augmente avec la pression du film de fluide.

2. Palier fluide suivant la revendication 1, caractérisé en ce que le fluide prélevé à partir du film de fluide sous pression est dirigé dans une chambre (16, 37) dont une paroi déformable (15, 35) est utilisée pour provoquer la mise sous tension de l'organe élastique (19, 33) qui appuie sur le patin (7, 7a, 7b).

3. Palier fluide suivant les revendications 1 et 2, caractérisé en ce que le fluide est prélevé sous le patin (7, 7a, 7b) à l'endroit du champ de pression maximum.

4. Palier fluide suivant la revendication 1, caractérisé en ce qu'au moins l'un des patins (7) présente un orifice (9) dans lequel est monté un élément (10) d'une rotule dont l'autre élément (12) est monté coulissant dans une bague (13) solidaire d'un corps (1) de palier et sur laquelle est en appui, par sa partie centrale, une rondelle élastique (19) dont la partie périphérique est en appui contre un organe annulaire (14) soumis à l'action d'une membrane souple (15) constituant l'une des parois d'une chambre de pression (16) en communication par un conduit (22) d'une bobine (20) et un orifice (11) de lun des éléments de rotule avec l'espace compris entre le patin (7) et l'arbre (8).

5. Palier fluide suivant la revendication 4, caractérisé en ce que la bobine (20) présente deux parties sphériques dont l'une est engagée dans un logement de l'un des éléments (10) de la rotule monté sur le patin (7) et dont l'autre est engagée dans un logement d'une tête (21) fixée sur un couvercle (17) monté sur le corps (1) de palier.

6. Palier fluide suivant la revendication 1, caractérisé en ce qu'au moins l'un des patins (7) reçoit une pièce d'appui (27) présentant un logement sphérique dans lequel est montée une rotule (29) ménagée à l'une des extrémités d'un piston (30) monté coulissant dans un alésage d'un corps (1) de palier et dont l'autre extrémité est un appui contre la partie centrale d'une rondelle élastique (33) dont la périphérie est en appui contre un organe mobile (34) présentant un bord annulaire (34a) sur lequel est fixée une membrane (35) annulaire souple qui est fixée à sa périphérie sur une bague (36) solidaire du corps (1) de palier, ledit organe mobile (34) et la membrane souple (35) formant l'une des parois d'une chambre (37) en communication par au moins un conduit (39) prévu dans le corps (1) de palier avec un conduit central (41) prévu dans le piston (30) et débouchant par un orifice de la pièce d'appui dans un orifice (28) prévu dans le palier et en communication avec le film de fluide.

7. Palier fluide suivant les revendications 4 et 6, caractérisé en ce que l'organe mobile (14, 34) soumis à la membrane souple se déplace dans la limite d'un jeu réglé en valeur et en position par des cales (25, 26) et (42, 43).

## Patentansprüche

1. Hydrodynamisches Flüssigkeitslager, bestehend aus Gleitbacken, die unter Zwischenfügung eines unter Druck stehenden Flüssigkeitsfilms um eine drehbare Welle angeordnet sind, wobei wenigstens eine der Gleitbacken (7, 7a, 7b) bei Stillstand der Welle (8) unter der Einwirkung eines elastischen Organs (19, 33) steht, das eine Vorspannung erzeugt, die auf das für das Zusammenhalten der Gesamtanordnung unbedingt erforderliche Mass beschränkt ist, dadurch gekennzeichnet, dass das elastische Organ (19, 33) im Betrieb der Welle (8) der Wirkung der unter Druck stehenden Flüssigkeit ausgesetzt ist, die dem unter der Gleitbacke (7) vorhandenen unter Druck stehenden Flüssigkeitsfilm entnommen wird, derart dass die auf die Gleitbacke einwirkende Kraft mit dem Druck des Flüssigkeitsfilms anwächst.

2. Flüssigkeitslager nach Anspruch 1, dadurch gekennzeichnet, dass die von dem unter Druck stehenden Flüssigkeitsfilm entnommene Flüssigkeit in eine Kammer (16, 37) geleitet wird, die eine verformbare Wandung (15, 35) aufweist, die dazu verwendet wird, das elastische Organ (19, 33), das sich auf der Gleitbacke (7, 7a, 7b) abstützt, unter Spannung zu setzen.

3. Flüssigkeitslager nach Anspruch 1 und 2, dadurch gekennzeichnet, dass die Flüssigkeit unter der Gleitbacke (7, 7a, 7b) an der Stelle maximalen Drucks entnommen wird.

4. Flüssigkeitslager nach Anspruch 1, dadurch gekennzeichnet, dass wenigstens eine der Gleitbacken (7) eine Öffnung (9) aufweist, in der ein Element (10) eines Kugelgelenks montiert ist, dessen anderes Element (12) gleitend in einem mit einem Lagerkörper (1) fest verbundenen Ring (13) montiert ist und auf dem sich in seinem zentralen Teil eine elastische Scheibe (19) abstützt, deren Umfangsbereich sich gegen ein ringförmiges Organ (14) abstützt, das der Einwirkung einer flexiblen Membran (15) ausgesetzt ist, die eine der Wandungen einer Druckkammer (16) bildet, die über einen Leitungskanal (22) einer Rolle (20) und eine Öffnung (11) eines der Elemente des Kugelgelenks mit dem zwischen der Gleitbacke (7) und der Welle (8) liegenden Zwischenraum in Verbindung steht.

5. Flüssigkeitslager nach Anspruch 4, dadurch gekennzeichnet, dass die Rolle (20) zwei sphärische Teile aufweist, von denen das eine in einer Aufnahme des an der Gleitbacke (7) montierten Elements (10) des Kugelgelenks eingreift, und von denen das andere in eine Aufnahme eingreift, die an einem Kopf (21) ausgebildet ist, der an einem auf dem Lagerkörper (1) montierten Deckelteil (17) befestigt ist.

6. Flüssigkeitslager nach Anspruch 1, dadurch gekennzeichnet, dass wenigstens eine der Gleitbacken (7) ein Stützteil (27) aufnimmt, das einen sphärischen Sitz aufweist, in dem ein Kugelgelenk (29) montiert ist, das an einem Ende eines Kolbens (30) angebracht ist, der in einer Bohrung eines Lagerkörpers (1) gleitbar montiert ist und dessen anderes Ende sich gegen den zentralen Bereich einer elastischen Scheibe (33) abstützt, die sich mit ihrem Umfang gegen ein bewegliches Organ (34) abstützt, das einen ringförmigen Rand (34a) besitzt, an dem eine flexible ringförmige Membran (35) befestigt ist, die mit ihrem Umfangsbereich an einem mit dem Lagerkörper (1) fest verbundenen Ring (36) befestigt ist, wobei das bewegliche Organ (34) und die flexible Membran (35) eine der Wandungen einer Kammer (37) bilden, die über wenigstens einen in dem Lagerkörper (1) vorgesehenen Leitungskanal (39) mit einem in dem Kolben (30) vorgesehenen zentralen Leitungskanal (4) in Verbindung steht, der über eine Öffnung des Stützteils in einer in dem Lager vorgesehenen Öffnung (28) mündet, die mit dem Flüssigkeitsfilm in Verbindung steht.

7. Flüssigkeitslager nach Anspruch 4 und 6, dadurch gekennzeichnet, dass das unter der Einwirkung der flexiblen Membran stehende bewegliche Organ (14, 34) sich in den Grenzen eines Spiels verschiebt, dessen Grösse und Position durch Beilagscheiben (25, 26 und 42, 43) bestimmt sind.

**Claims**

1. Hydrodynamic fluid bearing consisting of pads arranged round a rotary shaft, with a film of fluid under pressure being interposed, at least one of the pads (7, 7a, 7b) being subjected, when the shaft (8) is stopped, to the action of an elastic member (19, 33) generating a pre-stress limited to what is strictly necessary for retaining the assembly, characterized in that the said elastic means (19, 33) is subjected, during the functioning of the shaft (8), to the action of the fluid under pressure taken from the film of fluid under pressure located under the pad (7), and in such a way that the stress on the pad increases with the pressure of the fluid film.

2. Fluid bearing according to Claim 1, characterized in that the fluid taken from the film of fluid under pressure is conveyed into a chamber (16, 37), a deformable wall (15, 35) of which is used to cause the tensioning of the elastic member (19, 33) which bears on the pad (7, 7a, 7b).

3. Fluid bearing according to Claims 1 and 2, characterized in that the fluid is taken under the pad (7, 7a, 7b) at the location of the maximum pressure zone.

4. Fluid bearing according to Claim 1, characterized in that at least one of the pads (7) has an orifice (9), in which is mounted one element (10) of a knuckle, the other element (12) of which is mounted slideably in a ring (13) fixed to a bearing body (1), and on which bears via its central part an elastic washer (19), the peripheral part of which bears against an annular member (14) subjected to the action of a flexible diaphragm (15) forming one of the walls of a pressure chamber (16) in communication, via a duct (22) in a bobbin (20) and an orifice (11) in one of the knuckle elements, with the space located between the pad (7) and the shaft (8).

5. Fluid bearing according to Claim 4, characterized in that the bobbin (20) has two spherical parts, of which one is engaged in a receptacle of one of the knuckle elements (10), which is mounted on the pad (7), and of which the other is engaged in a receptacle of a head (21) fastened to a cover (17) mounted on the bearing body (1).

6. Fluid bearing according to Claim 1, characterized in that at least one of the pads (7) receives a bearing piece (27) having a spherical receptacle, in which is mounted a knuckle (29) formed at one of the ends of a piston (30) which is mounted slideably in a bore in a bearing body (1) and at the other end of which bears against the central part of an elastic washer (33), the periphery of which bears against a movable member (34) having an annular rim (34a), to which is fastened a flexible annular diaphragm (35) secured, on its periphery, to a ring (36) fixed to the bearing body (1), the said movable member (34) and the flexible diaphragm (35) forming one of the walls of a chamber (27) in communication, via at least one duct (39) provided in the bearing body (1), with a central duct (41) provided in the piston (30) and opening, via an orifice in the bearing piece, into an orifice (28) provided in the bearing and in communication with the fluid film.

7. Fluid bearing according to Claims 4 and 6, characterized in that the movable member (14, 34) subjected to the flexible diaphragm moves within the limit of a play, the amount and position of which are set by means of wedges (25, 26) and (42,43).

Fig.2

Fig.1

Fig-6

Fig-3

3/3

Fig-4

Fig-5